# EUROPÄISCHE PATENTSCHRIFT

(11) **EP 0 278 322 B1**
(45) Veröffentlichungstag und Bekanntmachung des Hinweises auf die Patenterteilung: **02.06.1993**
(21) Anmeldenummer: 88101134.0
(22) Anmeldetag: 27.01.1988
(51) Int. Cl.: B05B 13/02, C03C 17/00

(54) **Vorrichtung zur Sprühbeschichtung von Gefässmündungen**
Device for spray-coating the necks of containers
Dispositif de revêtement par pulvérisation de goulots de récipients

(30) Priorität: 07.02.1987 DE 3703870
(43) Veröffentlichungstag der Anmeldung: 17.08.1988
(73) Patentinhaber: MERCK PATENT GmbH, D-64271 Darmstadt (DE)
(72) Erfinder: Kraft, Dieter, D-6101 Rossdorf 2 (DE); Gröhser, Dieter, D-6114 Gross-Umstadt (DE)

(56) Entgegenhaltungen:
- DD-A- 117 995
- DE-A- 2 511 215
- DE-A- 2 745 790
- DE-B- 2 364 188
- US-A- 3 423 234
- US-A- 4 099 486

## Beschreibung

Die Erfindung betrifft eine Vorrichtung zur Sprühbeschichtung von Gefäßmündungen mit mindestens einer Sprühdüse.

Bei vielen Flüssigkeiten bereitet das Ausgießen Schwierigkeiten, weil bei Beendigung des Ausgießvorgangs ein Flüssigkeitsrest an der Außenseite der Gefäßmündung herabläuft. Die dadurch bedingte Verunreinigung der Gefäße, beispielsweise Glasflaschen, ist unerwünscht und muß insbesondere bei giftigen, aggressiven oder in sonstiger Weise gefährlichen Flüssigkeiten vermieden werden. Zu diese Zweck werden üblicherweise an den Gefäßündungen Ausgießringe angebracht, die eine scharfe Abrißkante bilden, die am Ende des Ausgießvorgangs das Abreißen des Flüssigkeitsfadens unterstützt. Andererseits bestehen diese Ausgießringe aus eine Kunststoff, der im allgemeinen eine geringere Oberflächenaffinität zu der Flüssigkeit aufweist als die Glasoberfläche.

Die Herstellung und die Anbringung dieser Ausgießringe bedingt einen verhältnismäßig großen Ferigungsaufwand. Die Ausgießringe verhindern nicht, daß an der Stirnseite der Gefäßmündung ein Flüssigkeitsrest verbleibt, der in vielen Fällen zu einer Verunreinigung oder eine Verkleben des Gefäßverschlusses führen kann und deshalb unerwünscht ist. Durch die Anwendung von Ausgießringen wird sogar noch ein zusätzlicher Spaltraum zwischen dem Ausgießring und der Gefäßmündung geschaffen, in dem sich ein Flüssigkeitsrest festsetzen kann.

Es ist bekannt, daß auf diese nachteiligen Ausgießringe verzichtet werden kann, wenn die Gefäßmündungen mit einer Silanbeschichtung versehen werden. Die Silanbeschichtung kann beispielsweise durch Eintauchen, Aufbürsten oder Sprühen aufgebracht werden (US-PS 3 423 234). Die Silanbeschichtung verhindert ein Nachtropfen oder ein Herablaufen von Flüssigkeitsresten und bewirkt außerdem, daß die ebenfalls beschichtete Stirnfläche der Gefäßmündung frei von Flüssigkeitsresten bleibt.

Die Silanbeschichtung von Gefäßmündungen hat jedoch bisher in der Praxis keine Anwendung gefunden, weil der Beschichtungsvorgang bei der Großserienfertigung von Glasflaschen und anderen Gefäßen nicht wirtschaftlich zufriedenstellend durchgeführt werden konnte.

In DE 23 64 188 ist eine Vorrichtung zur Beschichtung von Flaschen beschrieben, bei der man auf die um ihre Längsachse drehbar angeordnete Flasche eine Farbe aufströmen läßt. Diese Vorrichtung ist jedoch nicht zur Aufbringung niederviskoser Beschichtungsmittel geeignet und erlaubt keine selektive Beschichtung der Gefäßmündung. Mit der in DD 117,995 angegebenen Anordnung können Flaschen mit einer Beschichtung in Form eines wendelförmigen Bandes versehen werden, wobei sich auch diese Anordnung insbesondere zum Aufbringen hochviskoser Beschichtungsmaterialien eignet. Eine selektive Beschichtung von Gefäßmündungen ohne Kontaminierung des Gefäßinneren ist mit der in DE 117,995 beschriebenen Anordnung ebenfalls nicht möglich.

Aufgabe der Erfindung ist es daher, eine Vorrichtung der eingangs genannten Gattung zu schaffen, mit der auch in der Großserienfertigung in wirtschaftlich und technisch optimaler Weise eine Sprühbeschichtung von Gefäßmündungen mit Silanen ermöglicht wird.

Diese Aufgabe wird durch die erfindungsgemäße Vorrichtung zur Sprühbeschichtung von Gefäßmündungen (1), enthaltend mindestens eine Sprühdüse (16),gelöst, wobei die Sprühdüse (16) und/oder das zu behandelnde Gefäß (2) um die Mittelachse der Gefäßmündung (1) relativ zueinander drehbar angeordnet sind, dadurch gekennzeichnet, daß das Gefäß (2) durch einen in die Gefäßmündung (1) ragenden, mit einer Luftzufuhrleitung (19) verbundenen Düsenhorn (12) positioniert ist, welcher an seinem Umfang verteilt mehrere aus dem Gefäßinneren zur Gefäßmündung (1) gerichtete Luftdüsen (20) aufweist, daß neben der Sprühdüse (16) eine auf den Rand der Gefäßmündung (1) gerichtete, der Sprühdüse (16) nachlaufende Blasdüse (17) angeordnet ist und daß die Gefäßmündung (1) von einer nach außen weitgehend abgeschlossenen, mit einer Absaugleitung (22) versehenen Absaugglocke (21) umgeben ist.

Durch die Zentrierung und Fixierung der Gefäßmündung wird diese in eine fest vorgegebene Ausgangsstellung in bezug auf die Sprühdüse gebracht. Bei der anschließenden Relativdrehung der Sprühdüse, die durch eine Bewegung der Sprühdüse oder des Gefäßes ausgeführt werden kann, werden die Sprühdüse und die ihr jeweils nachlaufende Blasdüse in vorgegebener Anordnung und Abstand zur Gefäßmündung geführt, wobei der Sprühauftrag vorgenommen wird. Aus der Blasdüse tritt dabei ein Luftstrom oder sonstiger Gasstrom aus, der zum Glätten und Trocknen der beschichteten Gefäßmündung dient.

Die erfindungsgemäße Vorrichtung kann in den Fertigungsablauf bei der Glasflaschenherstellung eingegliedert werden oder im Abfüllbetrieb dem Abfüllvorgang vorangestellt werden (ortsunabhängiges System). Eine Umstellung auf unterschiedliche Gefäßabmessungen ist leicht möglich. Der Beschichtungsvorgang kann automatisch oder auch halbautomatisch durchgeführt werden. Die der Sprühdüse nachlaufende Blasdüse bewirkt, daß auch bei Schwankungen der Beschichtung eine glatte und trockene Mündungsoberfläche erzielt wird, ohne daß noch flüssige Silanreste oder -tropfen in den nachfolgenden Arbeitsstationen stören.

Zweckmäßigerweise ist die Sprühdüse und/oder die Blasdüse angenähert tangential zum Rand der Gefäßmündung gerichtet. Dadurch wird erreicht, daß der Sprühstrahl und/oder der Glätt- und Trocknungsstrahl der zu beschichtenden Oberfläche möglichst lange folgt. Dadurch wird eine besonders intensive und rasch trocknende Beschichtung erreicht.

Gemäß einer bevorzugten Ausführungsform der Erfindung ist vorgesehen, daß mehrere jeweils aus einer Sprühdüse und einer Blasdüse bestehenden Einheiten über den Umfang der Gefäßmündung verteilt angeordnet sind. Die erforderliche Relativdrehung zwischen dem Gefäß und den Düsen beträgt dann nur einen von der Anzahl der Düseneinheiten abhängigen Bruchteil einer vollen Umdrehung. Da die Beschichtung von mehreren Sprühdüsen gleichzeitig vorgenommen wird, verringert sich der Zeitaufwand für den gesamten Arbeitsablauf erheblich. Die einzelnen Dosen können über Schlauchverbindungen mit den zugehörigen Versorgungs- und Steuereinrichtungen verbunden sein.

Gemäß einer besonders vorteilhaften Ausführungsform der Erfindung ist vorgesehen, daß ein in die Gefäßmündung ragender, mit einer Luftzufuhrleitung verbundener Düsendorn, der zugleich zur Gefäßzentrierung dienen kann, an seinem Umfang verteilt mehrere nach rückwärts zur Gefäßmündung gerichtete Luftdüsen aufweist und daß die Gefäßmündung von einer nach außen weitgehend abgeschlossenen, mit mehreren Absaugleitungen versehenen Absaugglocke umgeben ist.

Der aus den zur Gefäßmündung gerichteten Luftdüsen austretende Luftstrom verhindert, daß Teile des Sprühstrahls in den Gefäßhals eindringen. Die Sprühwirkung wird dadurch an der Innenseite der Gefäßmündung auf den gewünschten Bereich begrenzt. Der aus der Gefäßmündung austretende, Sprühteilchen und Lösungsmitteldämpfe enthaltende Luftstrom sowie die an der Außenseite der Gefäßmündung weggesprühten Sprühteilchen und Lösungsmitteldämpfe werden durch die Absaugglocke abgeführt und treten deshalb nicht in die Umgebung aus.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 in einer Seitenansicht und teilweise im Schnitt eine Vorrichtung zur Sprühbeschichtung von Gefäßmündungen,
Fig. 2 eine Ansicht in Richtung der Pfeile II-II in Fig. 1 wobei die Absaugglocke weggelassen ist, und Fig. 3 einen vergrößerten senkrechten Teilschnitt im Bereich des Düsendorns der Vorrichtung nach Fig. 1.

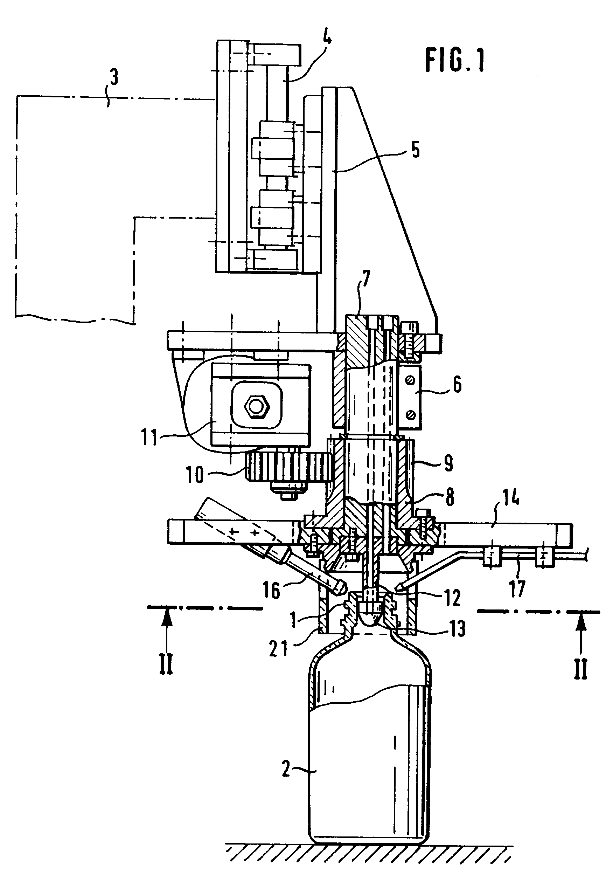

Die in der Zeichnung dargestellte Vorrichtung dient dazu, die Gefäßmündungen 1 von Gefäßen 2 und ähnlichen Gebinden, beispielsweise aus Glas, mit einer Silanbeschichtung zu versehen, um das Ausgießverhalten zu verbessern und die Verwendung von Ausgießringen überflüssig zu machen. An einem in Fig. 1 nur angedeuteten Ständer 3 ist eine Schlittenführung 4 für einen Hubschlitten 5 angebracht. Der Hubantrieb des Hubschlittens 5 erfolgt beispielsweise über einen (nicht dargestellten) Spindeltrieb.

Am Hubschlitten 5 ist über eine Klemmbüchse 6 eine höhenverstellbare Tragsäule 7 angebracht, auf der an ihrem unteren Ende eine Büchse 8 drehbar gelagert ist. Die Büchse 8 trägt an ihrem Umfang eine Verzahnung 9, die mit einem Antriebszahnrad 10 eines Drehantriebs 11 in Eingriff steht. Der am Hubschlitten 5 angebrachte Drehantrieb 11 kann beispielsweise einen Drehzylinder zum Antrieb des Zahnrades 10 aufweisen.

Am unteren Ende der Tragsäule 7 ist stirnseitig ein Düsendorn 12 angebracht, der mit seinem unteren, verdickten Zentrierabschnitt 13 in die Gefäßmündung 1 und den Gefäßhals des Gefäßes 2 paßt und diese zentriert.

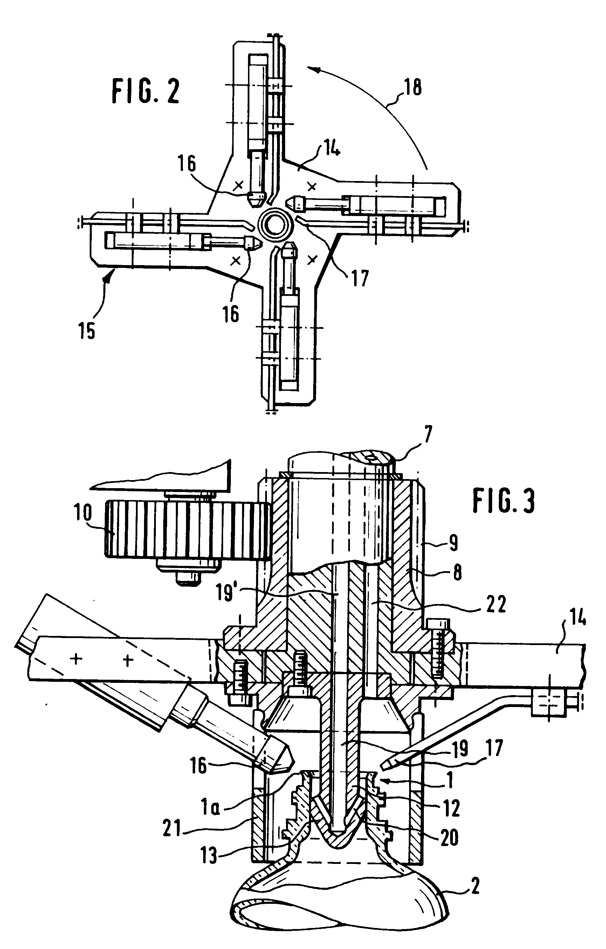

An der unteren Stirnseite der angetriebenen Büchse 8 ist ein sternförmiger Dusenträger 14 auswechselbar angebracht (Fig. 2), der an seinen vier Armen jeweils eine Düseneinheit 15 trägt, die aus einer Sprühpistole mit einer Sprühdüse 16 und einer Blasdüse 17 besteht.

Wie man aus Fig. 2 erkennt, sind sowohl die Sprühdüse 16 als auch die Blasdüse 17 tangential zum Umfang des Randes der zu beschichtenden Gefäßmündung 1 gerichtet. Während des Sprühvorgangs wird der Düsenträger 14 in der in Fig. 2 mit einem Pfeil 18 gekennzeichneten Drehrichtung um etwa 90 angetrieben, so daß die Blasdüse 17, aus der ein Luftstrom zum Glätten und Trocknen der Beschichtung austritt, der Sprühdüse 16 nachläuft, die die Beschichtung auf eine Gefäßmündung 1 sprüht.

Aus Fig. 3 erkennt man, daß die Sprühdüse 16 und die Blasdüse 17 schräg von oben und außen auf den Mündungsrand 1a des Gefäßes gerichtet sind. Dadurch wird erreicht, daß die Beschichtung ausgehend vom Mündungsrand 1a sowohl auf der sich stirnseitig anschließenden Fläche als auch an der sich am Umfang anschließenden Fläche kontinuierlich fortgesetzt wird.

Da die Drehung des Düsenträgers 14 wie dargelegt jeweils nur um etwa 90 erfolgt, kann die Versorgung der Sprühdüse 16 und Blasdüse 17 über Schlauchleitungen erfolgen.

In den feststehenden Düsendorn 12 führt eine zentrische Bohrung 18, die mit einer Luftzufuhrleitung 19 in der Tragsäule 7 verbunden ist. Von dort tritt die zugeführte Luft in schräg nach rückwärts gerichtete, am Umfang verteilte Luftdüsen 20 aus, die beispielsweise zur Gefäßmündung 1 hin gerichtet sind. Sie erzeugen eine aus der Gefäßmündung heraus gerichtete Luftströmung, die die in die Gefäßmündung gelangenden Sprühteilchen und Lösungsmitteldampfe mitreißt und in eine Absaugglocke 21 transportiert, die die gesamte Gefäßmündung 1 umgibt und nach außen weitgehend abgeschlossen ist.

Die Sprühdüse 15 und die Blasdüse 17 ragen durch Öffnungen in die Absaugglocke 21. Eine oder mehrere Luftabsaugleitungen 22 sind aus der Absaugglocke 21 durch die Tragsäule 7 hindurch herausgeführt und saugen die Sprühreste und Lösungsmitteldampfe aus der Absaugglocke 21 ab, so daß diese nicht in die Umgebung gelangen können.

Nach einem Beschichtungsvorgang fährt der Hubschlitten 5 nach oben und gibt die beschichtete Gefäßmündung 1 frei, so daß das Gefäß ausgewechselt werden kann. Zugleich kehrt der Düsenträger 14 durch eine Drückdrehung um etwa 90 in seine Ausgangsstellung zurück. Sobald ein neues Gefäß 2 in die Bearbeitungsstellung gebracht wurde, was beispielsweise durch eine automatische Transporteinrichtung geschehen kann, senkt sich der Düsendorn 12 mit seinem am unteren Ende konischen Zentrierabschnitt 13 in die Gefäßmündung 1. Der Zentrierabschnitt 13 zentriert die zu beschichtende Gefäßmündung 1 und bildet somit die Gefäßaufnahme, um die sich der Düsenträger 14 dreht.

Zur Umstellung auf andere Gefäßabmessungen können der Düsendorn 12 und der Düsenträger 14 sowie die Absaugglocke 21 leicht ausgewechselt werden. In vielen Fällen genügt es auch, nur den Düsendorn 12 auszuwechseln und die Sprühdüse 16 und Blasdüse 17 am Düsenträger 14 zur Anpassung an unterschiedliche Abmessungen der Gefäßmündung 1 zu verstellen. Eine Umstellung auf unterschiedliche Gefäßhöhen kann durch eine Verstellung der Tragsäule 7 in der Klemmhülse 6 erfolgen. Zweckmäßigerweise ist die Verzahnung 9 so breit ausgeführt, daß eine Verstellung der Antriebsteile 10, 11 nicht erforderlich ist.

Abweichend von dem dargestellten Ausführungsbeispiel ist es auch möglich, auf eine Höhenverstellung des Düsendorns 12 zu verzichten und statt dessen die Gefäße 2 dem Düsendorn 12 von unten zuzuführen. Die Zentrierung kann auch an der Außenseite der Gefäße 2 erfolgen, jedoch bietet die Zentrierung über den Düsendorn 12 den Vorteil, daß Maßabweichungen der Gefäße 2 die genaue Positionierung der Gefäßmündung 1 nicht beeinträchtigen.

Der durch die Luftdüsen 20 erzeugte, aus der Gefäßmündung 1 hinaus gerichtete Luftstrom verhindert das Eindringen von Beschichtungsmaterial in den Gefäßinnenraum auch dann, wenn der Zentrierabschnitt 13 des Düsendorn 12 nicht genau dichtend in den Gefäßhals paßt. Daher können auch fertigungsbedingte Maßabweichungen des Gefäßhalses in einem weiten Bereich toleriert werden.

Die Arbeitslage der zu beschichtenden Gefäße ist räumlich unabhängig und kann beispielsweise auch horizontal sein.

Es ist zweckmäßig, in das Vorratsgefäß fur die Silanlösung getrocknete Luft oder ein anderen feuchtigkeitsfreies Gas zuzugeben, um eine Reaktion der Silanlösung mit der Luftfeuchtigkeit auszuschließen.

## Patentansprüche

1. Vorrichtung zur Sprühbeschichtung von Gefäßmündungen (1) mit mindestens einer Sprühdüse (16), wobei die Sprühdüse (16) und/oder das zu behandelnde Gefäß (2) um die Mittelachse der Gefäßmündung (1) relativ zueinander drehbar angeordnet sind, dadurch gekennzeichnet, daß das Gefäß (2) durch einen in die Gefäßmündung (1) ragenden, mit einer Luftzufuhrleitung (19) verbundenen Düsendorn (12) positioniert ist, welcher an seinem Umfang verteilt mehrere aus dem Gefäßinneren zur Gefäßmündung (1) gerichtete Luftdüsen (20) aufweist, daß neben der Sprühdüse (16) eine auf den Rand der Gefäßmündung (1) gerichtete, der Sprühdüse (16) nachlaufende Blasdüse (17) angeordnet ist und daß die Gefäßmündung (1) von einer nach außen weitgehend abgeschlossenen, mit einer Absaugleitung (22) versehenen Absaugglocke (21) umgeben ist.

2. Vorrichtung nach Anspruch 1, dadurch gekennzeichnet, daß die Sprühdüse (16) angenähert tangential zum Rand der Gefäßmündung (1) gerichtet ist.

3. Vorrichtung nach Anspruch 1, dadurch gekennzeichnet, daß die Balsdüse (17) angenähert tangential zum Rand der Gefäßmundung (1) gerichtet ist.

4. Vorrichtung nach einem der Ansprüche 1-3, dadurch gekennzeichnet, daß die Sprühdüse (16) und die Blasdüse (17) schräg von oben und außen auf den Rand der Gefäßmündung (1) gerichtet sind.

5. Vorrichtung nach Anspruch 1, dadurch gekennzeichnet, daß mehrere jeweils aus einer Sprühdüse (16) und einer Blasdüse (17) bestehende Düseneinheiten (15) über den Umfang der Gefäßmündung (1) verteilt angeordnet sind.

6. Vorrichtung nach Anspruch 1, dadurch gekennzeichnet, daß das Gefäß (2) in einer Gefäßaufnahme gehalten ist.

7. Vorrichtung nach einem der Ansprüche 1-6, dadurch gekennzeichnet, daß der Düsendorn (12) einen in den Gefäßhals passenden Zentrierabschnitt (13) aufweist, der die Gefäßaufnahme bildet.

8. Vorrichtung nach Anspruch 7, dadurch gekennzeichnet, daß der Düsendorn (12) an einem senkrecht verfahrbaren Hubschlitten (5) befestigt ist und daß ein die Sprühdüse (16) und die Blasdüse (17) bzw. mehrere Düseneinheiten (15) tragender Düsenträger (14) um die Achse des Düsendorns (12) drehbar und antreibbar gelagert ist.

9. Vorrichtung nach Anspruch 8, dadurch gekennzeichnet, daß der Düsendorn (12) stirnseitig an einer Tragsäule (7) auswechselbar angebracht ist und daß der Düsenträger (14) stirnseitig an einer auf der Tragsäule (7) drehbar gelagerten, mit einer Antriebsvorrichtung (10, 11) verbundenen Büchse (8) auswechselbar angebracht ist.

## Claims

1. Apparatus for the spray coating of vessel mouths (1) with at least one spray nozzle (16), the spray nozzle (16) and/or the vessel (2) to be treated being arranged rotatably relative to one another about the centre axis of the vessel mouth (1), characterised in that the vessel (2) is positioned by a nozzle mandrel (12) which projects into the vessel mouth (1) and is connected to an air-supply line (19) and which has, distributed on its circumference, a plurality of air nozzles (20) directed out of the vessel interior to the vessel mouth (1), in that arranged next to the spray nozzle (16) is a blowing nozzle (17) pointing to the edge of the vessel mouth (1) and trailing the spray nozzle (16), and in that the vessel mouth (1) is surrounded by a suction bell (21) substantially closed off relative to the outside and equipped with a suction line (22).

2. Apparatus according to Claim 1, characterised in that the spray nozzle (16) is directed approximately tangentially to the edge of the vessel mouth (1).

3. Apparatus according to Claim 1, characterised in that the blowing nozzle (17) is directed approximately tangentially to the edge of the vessel mouth (1).

4. Apparatus according to one of Claims 1-3, characterised in that the spray nozzle (16) and the blowing nozzle (17) are directed obliquely from above and from the outside to the edge of the vessel mouth (1).

5. Apparatus according to Claim 1, characterised in that several nozzle units (15), each consisting of a spray nozzle (16) and of a blowing nozzle (17), are arranged distributed over the periphery of the vessel mouth (1).

6. Apparatus according to Claim 1, characterised in that the vessel (2) is held in a vessel retainer.

7. Apparatus according to one of Claims 1-6, characterised in that the nozzle mandrel (12) has a centring portion (13) which fits into the vessel neck and which constitutes the vessel retainer.

8. Apparatus according to Claim 7, characterised in that the nozzle mandrel (12) is fastened to a vertically moveable lifting slide (5), and in that a nozzle holder (14) carrying the spray nozzle (16) and the blowing nozzle (17) or several nozzle units (15) is mounted so as to be rotatable and driveable about the axis of the nozzle mandrel (12).

9. Apparatus according to Claim 8, characterised in that the nozzle mandrel (12) is attached exchangeably to the end face of a supporting column (7), and in that the nozzle holder (14) is attached exchangeably to the end face of a bush (8) mounted rotatably on the supporting column (7) and connected to a drive device (10, 11).

## Revendications

1. Dispositif pour l'enduction par pulvérisation d'orifices de récipients (1), comprenant au moins une tuyère de pulvérisation (16), la tuyère de pulvérisation (16) et/ou le récipient (2) à traiter étant disposés en rotation mutuelle autour de l'axe central de l'orifice de récipient (1), caractérisé en ce que le récipient (2) est positionné à l'intervention d'un mandrin à tuyères (12) faisant saillie dans l'orifice de récipient (1) et relié à un conduit d'alimentation d'air (19), le mandrin à tuyères présentant plusieurs tuyères pour l'air (20) réparties sur sa périphérie, orientées depuis l'intérieur du récipient en direction de l'orifice de récipient (1), en ce que, outre la tuyère de pulvérisation (16), est disposée une tuyère de soufflage (17) qui suit la tuyère de pulvérisation (16) et qui donne sur le bord de l'orifice de récipient (1), et en ce que l'orifice de récipient (1) est entouré d'une cloche d'aspiration (21) munie d'un conduit d'aspiration (22) et fermée dans une large mesure vers l'extérieur.

2. Dispositif selon la revendication 1, caractérisé en ce que la tuyère de pulvérisation (16) est orientée en direction approximativement tangentielle par rapport au bord de l'orifice de récipient (1).

3. Dispositif selon la revendication 1, caractérisé en ce que la tuyère de soufflage (17) est orientée en direction approximativement tangentielle par rapport au bord de l'orifice de récipient (1).

4. Dispositif selon l'une quelconque des revendications 1 à 3, caractérisé en ce que la tuyère de pulvérisation (16) et la tuyère de soufflage (17) sont orientées en inclinaison à partir du haut et de l'extérieur en direction du bord de l'orifice de récipient (1).

5. Dispositif selon la revendication 1, caractérisé en ce que plusieurs unités de tuyères (15) constituées chacune par une tuyère de pulvérisation (16) et par une tuyère de soufflage (17) sont disposées en étant réparties sur la périphérie de l'orifice de récipient (1).

6. Dispositif selon la revendication 1, caractérisé en ce que le récipient (2) est maintenu dans un logement qui lui est destiné.

7. Dispositif selon l'une quelconque des revendications 1 à 6, caractérisé en ce que le mandrin à tuyères (12) présente une section de centrage (13) qui vient s'adapter dans le col du récipient, la section formant le logement de récipient.

8. Dispositif selon la revendication 7, caractérisé en ce que le mandrin à tuyères (12) est fixé à un chariot de levage (5) apte à se déplacer verticalement et en ce qu'un support de tuyères (14) portant la tuyère de pulvérisation (16) et la tuyère de soufflage (17) ou encore plusieurs unités de tuyères (15), est monté en rotation et en entraînement autour de l'axe du mandrin à tuyères (12).

9. Dispositif selon la revendication 8, caractérisé en ce que le mandrin à tuyères (12) est appliqué de façon à pouvoir être remplacé, contre la face frontale d'une colonne de support (7) et en ce que le support de tuyères (14) est appliqué de manière à pouvoir être remplacé, avec sa face frontale, contre une douille (8) montée en rotation sur la colonne de support (7) et reliée à un dispositif d'entraînement (10, 11).
